# EUROPÄISCHE PATENTSCHRIFT

(11) **EP 0 582 725 B1**
(45) Veröffentlichungstag und Bekanntmachung des Hinweises auf die Patenterteilung: **06.11.1996**
(21) Anmeldenummer: 92113548.9
(22) Anmeldetag: 08.08.1992
(51) Int. Cl.: G01M 3/18

(54) **Rohrleitungssystem zur Leckaufspürung**
Piping system for leak detection
Système de tuyauterie pour la détection de fuites

(43) Veröffentlichungstag der Anmeldung: 16.02.1994
(73) Patentinhaber: Brandes, Bernd, 24329 Grebin (DE)
(72) Erfinder: Brandes, Bernd, 24329 Grebin (DE)
(74) Vertreter: Einsel, Robert, Dipl.-Ing.

(56) Entgegenhaltungen:
- EP-A- 0 253 085
- EP-A- 0 257 575
- EP-A- 0 298 479
- DE-A- 4 015 075
- GB-A- 2 220 494

## Beschreibung

Die Erfindung geht aus von einem Rohrleitungssystem (DE-A-4 015 075) gemäß dem Oberbegriff des Anspruchs 1. Rohrleitungssysteme zur Übertragung von Fernwärme oder sonstiger flüssiger Medien bestehen im allgemeinen aus einem das Medium führenden Innenrohr, einem das Innenrohr mit Abstand umgebenden Außenrohr und einem Füllmaterial in dem Zwischenraum zwischen Innenrohr und Außenrohr. Das Füllmaterial besteht im allgemeinen aus Polyurethan. Zur Detektierung und Ortung von Undichtigkeiten am Innenrohr ist es bekannt, in dem Zwischenraum zwischen Innenrohr und Außenrohr Sensoren im Form elektrischer Leiter vorzusehen. Bei einer Undichtigkeit am Innenrohr dringt Flüssigkeit in den Zwischenraum. Die dadurch auftretende Feuchtigkeit wird durch den Sensor ermittelt. Durch elektrische Messung der erhöhten Leitfähigkeit des an sich nicht leitenden Füllmaterials kann eine Fehlerdetektierung und Fehlerortung vorgenommen werden.

Bei einem ersten Meßverfahren besteht ein Leiter des Sensors z.B. aus Nickelchrom (NiCr) und ist relativ hochohmig. Die Fehlerortung erfolgt nach dem Widerstandsmeßverfahren, indem der ohmsche Widerstand zwischen diesem Leiter und einem niederohmigen zweiten Leiter oder einem leitfähigen Rohr gemessen wird und nach dem Prinzip des unbelasteten Spannungsteilers die Lage der Fehlerstelle ermittelt wird. Dieses Verfahren ist vorteilhaft bei der Bauüberwachung, ermöglicht eine präzise frühzeitige Ortung und zeigt vorzugsweise die Quelle des Schadens an.

Bei einem zweiten Meßverfahren (EP-A-0 298 479) erfolgt die Fehlerortung durch Messung der Laufzeit eines Impulses, der an der niederohmig gewordenen Fehlerstelle reflektiert wird. Als Sensor sind üblicherweise zwei niederohmige unisolierte Kupferdrähte vorgesehen. Die Ortung erfolgt meist zwischen Draht und Rohr. Dieses Verfahren ist vorteilhaft bei einer relativ späten Ortung, bei besonders starken Schadensbildern, also schon sehr feuchten Fehlerstellen und zeigt vorzugsweise die Grenzen des Schadens an.

Die beiden beschriebenen Meßverfahren beruhen daher auf unterschiedlichen Prinzipien. Das erste Meßverfahren eignet sich mehr bei weniger feuchten Fehlerstellen und hat eine Einsatzgrenze in Richtung sehr feuchter Fehlerstellen. Das zweite Meßverfahren eignet sich vorzugsweise bei besonders feuchten Fehlerstellen und hat eine Einsatzgrenze hin zu weniger feuchten Fehlerstellen. Die beiden Meßverfahren werden bisher je nach Anwenderwunsch alternativ eingesetzt.

Aus Gründen des Umweltschutzes wird in zunehmendem Maße das in dem Rohr transportierte Wasser entsalzt, um bisher verwendete umweltgefährdende Antikorrosionsmittel zu vermeiden. Dadurch wird das Wasser sehr hochohmig und nimmt die Eigenschaften von destilliertem Wasser an, wodurch beide Meßverfahren erschwert werden. Der Innenraum zwischen Innen- und Außenrohr wurde bislang mit Polyurethan ausgeschäumt, das mit FCKW (Fluorchlorkohlenwasserstoff) aufgeschäumt war. Das Chlor erzeugte in einem Schadensfall Salzsäure, die eine meßbare Verringerung des Widerstandes des Polyurethanschaumes bewirkte und dadurch eine Messung ermöglichte. Ebenfalls aus Umweltgründen ist in dem Schaum künftig kein Chlor mehr vorhanden, wodurch die zur Fehlerortung ausgenutzte Niederohmigkeit des Schaumes in einem Schadensfall nicht mehr in ausreichendem Maße auftritt. Durch diese Maßnahmen werden also die Einsatzmöglichkeiten der Meßverfahren eingeschränkt, wobei insbesondere die Laufzeitmessung mit Reflexion schwerer einsetzbar ist, wenn nicht verstärkende Mittel (Indikatoren, Salze, Filze etc.) zusätzlich eingebaut werden.

Der Erfindung liegt die Aufgabe zugrunde, ein Rohrleitungssystem zu schaffen, das die Vorteile der beiden beschriebenen Meßverfahren vereinigt und somit im großen Umfang universell einsetzbar ist.

Diese Aufgabe wird durch die im Anspruch 1 angegebene Erfindung gelöst. Vorteilhafte Weiterbildungen der Erfindung sind in den abhängigen Ansprüchen angegeben.

Bei der erfindungsgemäßen Lösung werden somit der hochohmige Leiter und der isolierte Kupferleiter des ersten Meßverfahrens mit nur einem unisolierten Kupferleiter des zweiten Meßverfahrens kombiniert. Der bisher verwendete zweite unisolierte Kupferleiter des zweiten Meßverfahrens wird also weggelassen und somit von dem bisher üblichen Aufbau des zweiten Meßverfahrens abgewichen. Die Erfindung beruht dabei auf der Erkenntnis, daß zur Realisierung des zweiten Meßverfahrens ein unisolierter Kupferleiter ausreicht und der zweite Kupferleiter auch isoliert sein kann. Eine Fehlerstelle kann dann zwar nur durch den unisolierten Kupferleiter detektiert werden. Die dann an diesem Leiter auftretende Reflexion ist jedoch ausreichend, um die Fehlerstelle zu detektieren und zu orten. Das erfindungsgemäße Rohrleitungssystem mit einem Sensor aus drei unterschiedlichen Drähten hat somit die Vorteile der beiden beschriebenen Meßverfahren und ermöglicht den wahlweisen Einsatz dieser beiden Verfahren je nach den vorliegenden Bedingungen. Von Vorteil dabei ist, daß für den Sensor nicht die vollständige Summe des Aufwandes der beiden Meßverfahren erforderlich ist, der insgesamt zu vier Leitern für den Sensor führen würde. Die Nachteile des einen Meßverfahrens werden also gewissermaßen durch die Vorteile des anderen Meßverfahrens kompensiert, wodurch sich ein denkbar weiter Anwendungsbereich für die Fehlerortung ergibt.

Es ist zwar bekannt, Sensoren in Dreileitertechnik auszuführen (EP-A-0257575, GB-A-222494), doch ist es nicht möglich, mit diesen Sensoren die der Erfindung zugrundeliegende Aufgabe zu lösen.

Die Erfindung wird im folgenden anhand der Zeichnung an Ausführungsbeispielen erläutert.

Darin zeigen
- Fig. 1: im Prinzip ein Leitungsrohr mit Sensor nach dem ersten Meßverfahren,
- Fig. 2: im Prinzip ein Leitungsrohr mit Sensor nach dem zweiten Meßverfahren,
- Fig. 3: ein erfindungsgemäß ausgebildetes Leitungsrohr insbesondere für das erste Meßverfahren,
- Fig. 4: ein erfindungsgemäß ausgebildetes Leitungsrohr insbesondere für das zweite Meßverfahren,
- Fig. 5: die Verbindung zweier Leitungsrohre gemäß Fig. 3 und
- Fig. 6: die Verbindung zweier erfindungsgemäß ausgebildeter Leitungsrohre.

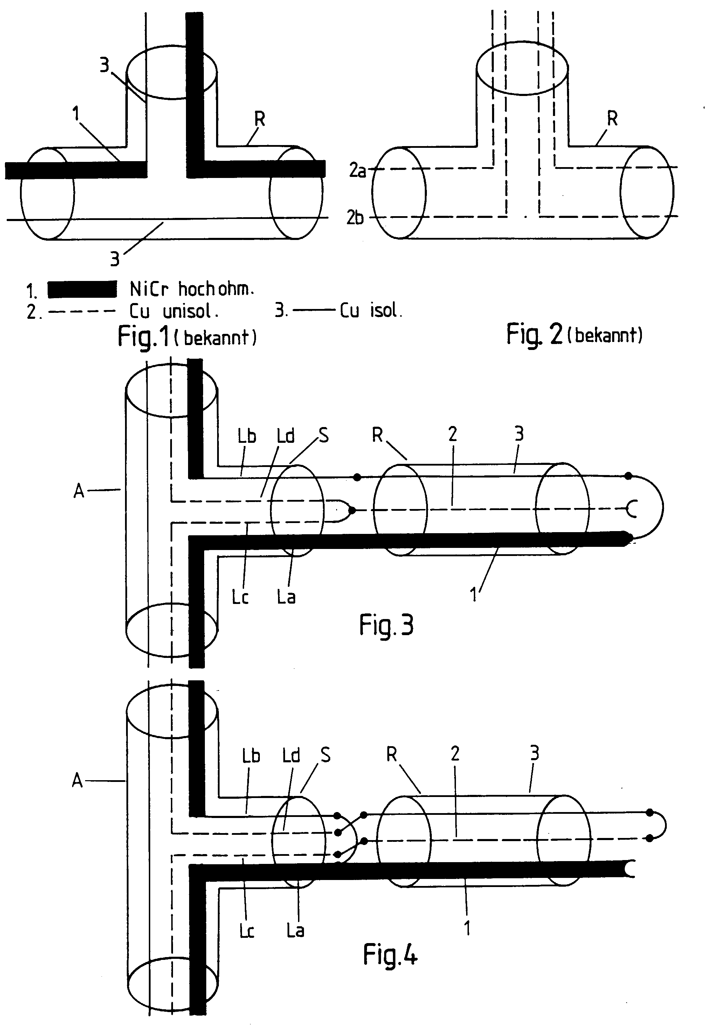

Fig. 1 zeigt ein Leitungsrohr R, das mit einem Sensor in Form eines hochohmigen Leiters 1, z.B. aus Nickelchrom, und eines isolierten Kupferleiters 3 versehen ist. Die Leiter 1, 3 verlaufen in dem Zwischenraum zwischen einem Außenrohr RA und dem zur Vereinfachung nicht dargestellten Innenrohr RI. Die Detektierung und Ortung des Fehlers erfolgt durch Widerstand- und Potentiometermessung mit den Leitern 1, 3 am Eingang jeweils eines Rohres, wodurch auf die Lage der Fehlerstelle, die eine niederohmige Verbindung durch eindringende Feuchtigkeit zwischen Draht 1 und Rohr, Erde, oder Rohrersatzachse darstellt, geschlossen werden kann. Der Leiter 1 ist mit etwa 5,6 Ohm/m relativ hochohmig ausgebildet, um eine wirkungsvolle Messung zu ermöglichen und den Energieverbrauch gering zu halten. Das Leitungsrohr R ist als T-Stück dargestellt. Der nach oben gerichtete Stutzen führt z.B. zu einer Anschlußstelle in einem Wohnhaus. Dieses Meßverfahren ist bekannt und beschrieben in der DE-A-40 15 075.5.

In Fig. 2 besteht der im Leitungsrohr R verlaufende Sensor aus zwei gleichen unisolierten Kupferdrähten 2a und 2b. Bei einem Feuchtigkeitseinbruch aufgrund einer Undichtigkeit erfolgt an der Fehlerstelle eine Reflexion eines am Eingang eingespeisten Impulses, wodurch eine Detektierung und Ortung der Fehlerstelle möglich ist.

Fig. 3 zeigt einen Adapter A in Form eines T-förmigen Leitungsrohres. Aus dem Anschlußstutzen S des Adapters A sind insgesamt vier Leiter herausgeführt. Ein erster Leiter La ist ein hochohmiger NiCr-Leiter und enspricht dem Leiter 1 in Fig. 1. Der Leiter La ist unmittelbar mit dem entsprechenden hochohmigen Leiter 1 des Leitungsrohres R verbunden. Ein zweiter Leiter Lb ist als isolierter Kupferleiter ausgebildet und entspricht dem Leiter 3 in Fig. 1. Der Leiter Lb ist mit dem entsprechenden Leiter 3 des Leitungsrohres R verbunden. Die beiden Leiter Lc und Ld, die als unisolierte Kupferleiter ausgebildet sind, sind am Ausgang des Stutzen S miteinander und mit dem entsprechenden Leiter 2 des Leitungsrohres R verbunden. Der Leiter 2 entspricht einem der Leiter 2a, 2b in Fig. 2. Am Ausgang des Leitungsrohres R sind die Leiter 1, 3 miteinander verbunden. Die Anordnung nach Fig. 3 ermöglicht somit bevorzugt die Anwendung des ersten Meßverfahrens gemäß Fig. 1. Der blanke Leiter 2 steht an jedem Leitungsende zu Messungen nach dem zweiten Verfahren zusätzlich zur Verfügung.

In Fig. 4 sind der Adapter A und das Leitungsrohr R genauso ausgebildet wie in Fig. 3. Im Gegensatz zu Fig. 3 ist jedoch der Leiter Lb am Ausgang des Stutzen S mit dem Leiter La verbunden. Außerdem sind die beiden Leiter Lc und Ld nicht miteinander, sondern mit den Leitern 3 und 2 des Leitungsrohres R verbunden. Außerdem sind am Ausgang des Leitungsrohres R die beiden Leiter 2 und 3 miteinander verbunden. Die Anordnung gemäß Fig. 4 arbeitet somit gemäß dem zweiten beschriebenen Meßverfahren gemäß Fig. 2. Im Gegensatz zu Fig. 2 ist die Meßschleife jedoch nicht durch zwei unisolierte Kupferleiter gemäß Fig. 2, sondern durch den unisolierten Kupferleiter 2 und den isolierten Kupferleiter 3 gebildet. Die Anordnung nach Fig. 4 ermöglicht somit die bevorzugte Anwendung des zweiten Meßverfahrens gemäß Fig. 2. Der hochohmige Sensor 1 steht an jedem Leitungsende zu Messungen nach dem ersten Verfahren zusätzlich zur Verfügung.

Das als Grundelement dienende Formstück A ist somit für beide Meßverfahren gleich und bietet die Möglichkeit, das angeschlossene Leitungsrohr R nach dem ersten Meßverfahren gemäß Fig. 3 entsprechend Fig. 1 oder nach dem zweiten Meßverfahren gemäß Fig. 4 entsprechend Fig. 2 weiterzuführen.

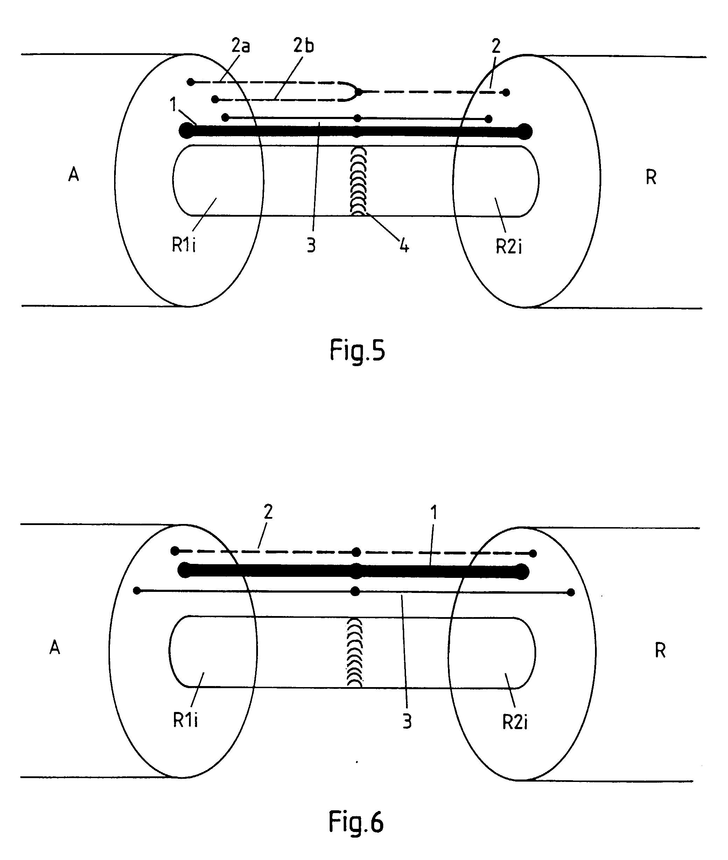

Fig. 5 zeigt die vollständige Darstellung der Verbindung zweier unterschiedlicher Leitungsrohre A und R zur Realisierung des ersten Meßverfahrens gemäß Fig. 3. Die Punkte an den Leitungen deuten jeweils die Verbindungsstellen zwischen den beiden Rohren A und B und den Austritt und den Eintritt der Leiter in die Wärmedämmung der Rohre an. Aus dem Rohr A, welches das das Medium führende Innenrohr R1i enthält, treten der hochohmige Leiter 1, der isolierte Kupferleiter 3 und die beiden unisolierten Kupferleiter 2a, 2b aus. Der Leiter 1 ist unmittelbar mit dem entsprechenden hochohmigen Leiter 1 des Rohres R verbunden. Ebenso ist der Leiter 3 des Rohres A unmittelbar mit dem entsprechenden Leiter 3 des Rohres R verbunden. Die Leiter 2a und 2b des Rohres A sind miteinander und außerdem mit dem entsprechenden Leiter 2 des Rohres R verbunden. Die das Medium führenden Innenrohre R1i und R2i der Rohre A, R sind über die Schweißnaht 4 miteinander verbunden.

Fig. 6 zeigt die Verbindung zweier Rohre A und R, die beide in gleicher Weise mit einem Sensor aus dem hochohmigen Leiter 1, dem unisolierten niederohmigen Kupferleiter 2 und dem isolierten Kupferleiter 3 versehen sind.

Der erste Leiter 1 ist im allgemeinen ein unisolierter Leiter, da er der zu detektierenden Feuchtigkeit ausgesetzt sein muß. Der Leiter 1 kann aber auch von einer, beispielsweise perforierten Isolation umgeben sein, die einen zusätzlichen Schutz für den Leiter darstellt, jedoch die Einwirkung der Feuchtigkeit auf den Leiter selbst und damit die Detektierung und Ortung der Fehlerstelle ermöglicht.

Die niederohmigen Leiter 2,3 haben spezifische Widerstandswerte unterhalb 0,1 Ohm/m, vorzugsweise 0,01 Ohm/m. Der hochohmige Leiter 1 hat spezifische Widerstandswerte von oberhalb 0,1 Ohm/m, vorzugsweise 5,6 Ohm/m.

## Patentansprüche

1. Rohrleitungssystem mit einem in einem Außenrohr angeordneten Innenrohr für den Transport eines Mediums und mit einem Sensor in Form von drei elektrischen Leitern für die Detektierung von leitenden Medien im Zwischenraum zwischen Außenrohr und Innenrohr, **dadurch gekennzeichnet, daß** der erste Leiter (1) einen Widerstandwert oberhalb 0,1 Ohm/m hat, der zweite Leiter (2) und der dritte Leiter (3) einen Widerstandswert unterhalb 0,1 Ohm/m haben, und daß der zweite Leiter unisoliert und der dritte Leiter isoliert ausgebildet sind, wobei die Widerstandswerte der drei Leiter so bemessen sind, daß der Sensor wahlweise als Teil einer hochohmigen Widerstandsmessung oder einer niederohmigen Reflexionsmessung schaltbar ist.

2. System nach Anspruch 1, **dadurch gekennzeichnet, daß** der erste Leiter einen Widerstandswert von 5,6 Ohm/m hat und die zweiten und dritten Leiter (2, 3) einen Widerstandswert von 0,01 Ohm /m haben.

3. System nach Anspruch 1, **dadurch gekennzeichnet,** daß ein Adapter (A) vorhanden ist, der an einem Ausgang einen Leiter La mit den Werten des ersten Leiters (1), zwei Leiter (Lc und Ld) mit den Werten des zweiten Leiters (2) und einen Leiter (Lb) mit den Werten des dritten Leiters (3) aufweist.

4. System nach Anspruch 1, **dadurch gekennzeichnet,** daß an den Ausgang des Adapters (A) ein Leitungsrohr (R) mit dem ersten Leiter (1), dem zweiten Leiter (2) und dem dritten Leiter (3) anschließbar ist.

5. System nach Anspruch 3, **dadurch gekennzeichnet,** daß für eine Fehlerortung durch Spannungsteilermessung zwischen Ausgang des Adapters (A) und Eingang des Leitungsrohres (R) der Leiter La mit dem ersten Leiter (1) des Leitungsrohres (R), die Leiter Lc und Ld miteinander und mit dem zweiten Leiter (2) des Leitungsrohres (R), der Leiter Lb mit dem dritten Leiter (3) des Leitungsrohres (R) und am Ende des Leitungsrohres (R) der erste Leiter (1) und der dritte Leiter (3) miteinander verbunden sind.

6. System nach Anspruch 3, **dadurch gekennzeichnet,** daß für eine Fehlerortung durch Reflexion zwischen Ausgang des Adapters (A) und Eingang des Leitungsrohres (R) die Leiter La mit Lb mit dem ersten Leiter (1) des Leitungsrohres (R), der Leiter Ld mit dem dritten Leiter (3) des Leitungsrohres (R) und am Ende des Leitungsrohres (R) der zweiten Leiter (2) und der dritte Leiter (3) miteinander verbunden sind und im Adapter A in Form des Leiters Lc weitergeführt werden.

7. System nach Anspruch 3, **dadurch gekennzeichnet,** daß der Adapter (A) als T-Stück ausgebildet ist.

8. System nach Anspruch 3, **dadurch gekennzeichnet,** daß die Leiter La, Lc und Ld zu zwei gegenüberliegenden Enden des Adapters (A) und der Leiter Lb mit einem zum zweiten Ende des Adapters (A) führenden Leiter in Form des ersten Leiters (1) geführt ist.

9. System nach Anspruch 1, **dadurch gekennzeichnet,** daß der erste Leiter (1) unisoliert ist.

10. System nach Anspruch 1, **dadurch gekennzeichnet,** daß der erste Leiter (1) von einer perforierten Isolation umgeben ist.

## Claims

1. A pipeline system with an inner pipe, arranged in an outer pipe, for the transport of a medium and with a sensor in the form of three electrical conductors for the detection of conductive media in the space between the outer pipe and the inner pipe, characterised in that the first conductor (1) has a resistance value above 0.1 Ohm/m, the second conductor (2) and the third conductor (3) have a resistance value below 0.1 Ohm/m and that the second conductor is non-insulated and the third conductor is insulated, where the resistance values of the three conductors are dimensioned such that the sensor optionally can be connected as part of a high-ohmic resistance measurement or of a low-ohmic reflection measurement.

2. A system as claimed in Claim 1, characterised in that the first conductor has a resistance value of 5.6 Ohm/m and the second and third conductors (2, 3) have a resistance value of 0.01 Ohm/m.

3. A system as claimed in Claim 1, characterised in that an adapter (A) is provided which at an output comprises a conductor La with the values of the first conductor (1), two conductors (Lc and Ld) with the values of the second conductor (2) and a conductor (Lb) with the values of the third conductor (3).

4. A system as claimed in Claim 1, characterised in that a pipeline (R) with the first conductor (1), the second conductor (2) and the third conductor (3) can be connected to the output of the adapter (A).

5. A system as claimed in Claim 3, characterised in that for fault location by voltage divider measurement between the output of the adapter (A) and the input of the pipeline (R), the conductor La is connected to the first conductor (1) of the pipeline (R), the conductors Lc and Ld are connected to one another and to the second conductor (2) of the pipeline (R), the conductor Lb is connected to the third conductor (3) of the pipeline (R), and at the end of the pipeline (R) the first conductor (1) and the third conductor (3) are connected to one another.

6. A system as claimed in Claim 3, characterised in that for fault location by reflection between the output of the adapter (A) and the input of the pipeline (R), the conductors La and Lb are connected to the first conductor (1) of the pipeline (R), the conductor Ld is connected to the third conductor (3) of the pipeline (R), and at the end of the pipeline (R) the second conductor (2) and the third conductor (3) are connected to one another and in the adapter A lead onwards in the form of the conductor Lc.

7. A system as claimed in Claim 3, characterised in that the adapter (A) is designed as a T-piece.

8. A system as claimed in Claim 3, characterised in that the conductors La, Lc and Ld are guided to two opposite ends of the adapter (A) and the conductor Lb is guided with* a conductor leading to the second end of the adapter (A) and in the form of the first conductor (1).

9. A system as claimed in Claim 1, characterised in that the first conductor (1) is non-insulated.

10. A system as claimed in Claim 1, characterised in that the first conductor (1) is surrounded by a perforated insulation.

## Revendications

1. Système de tuyauterie, avec un tube intérieur disposé dans un tube extérieur et destiné au transport d'un fluide, et avec un capteur sous la forme de trois conducteurs électriques pour la détection de fuites de fluide dans l'espace intermédiaire entre le tube extérieur et le tube intérieur, **caractérisé** en ce que le premier conducteur (1) possède une valeur de résistance supérieure à 0,1 Ohm/m, le deuxième conducteur (2) et le troisième conducteur (3) possèdent une valeur de résistance inférieure à 0,1 Ohm/m, et en ce que le deuxième conducteur est réalisé non isolé et le troisième conducteur est réalisé isolé, les valeurs de résistance des trois conducteurs étant dimensionnées de telle sorte que le capteur peut être commuté au choix comme élément d'une mesure de résistance à haute impédance ou d'une mesure de réflexion à basse impédance.

2. Système selon la revendication 1, **caractérisé** en ce que le premier conducteur possède une valeur de résistance de 5,6 Ohm/m, et le deuxième conducteur (2) et le troisième conducteur (3) possèdent une valeur de résistance de 0,01 Ohm/m.

3. Système selon la revendication 1, **caractérisé** en ce qu'un adaptateur (A) est présent, qui présente à une sortie un conducteur La avec les valeurs du premier conducteur (1), deux conducteurs (Lc et Ld) avec les valeurs du deuxième conducteur (2) et un conducteur (Lb) avec les valeurs du troisième conducteur (3).

4. Système selon la revendication 1, **caractérisé** en ce qu'on peut raccorder à la sortie de l'adaptateur (A) un tuyau de conduite (R) avec le premier conducteur (1), le deuxième conducteur (2) et le troisième conducteur (3).

5. Système selon la revendication 3, **caractérisé** en ce que, pour une localisation de défaillance par mesure par diviseur de tension entre la sortie de l'adaptateur (A) et l'entrée du tuyau de conduite (R), le conducteur La est relié au premier conducteur (1) du tuyau de conduite (R), les conducteurs Lc et Ld sont reliés entre eux et au deuxième conducteur (2) du tuyau de conduite (R), le conducteur Lb est relié au troisième conducteur (3) du tuyau de conduite (R) et, à l'extrémité du tuyau de conduite (R), le premier conducteur (1) et le troisième conducteur (3) sont reliés entre eux.

6. Système selon la revendication 3, **caractérisé** en ce que, pour une localisation de défaillance par réflexion entre la sortie de l'adaptateur (A) et l'entrée du tuyau de conduite (R), les conducteurs La et Lb sont reliés entre eux et au premier conducteur (1) du tuyau de conduite (R), le conducteur Ld est relié au troisième conducteur (3) du tuyau de conduite (R) et, à l'extrémité du tuyau de conduite (R), le deuxième conducteur (2) et le troisième conducteur (3) sont reliés entre eux et poursuivis dans l'adaptateur (A) sous la forme du conducteur Lc.

7. Système selon la revendication 3, **caractérisé** en ce que l'adaptateur (A) est réalisé sous forme de pièce en T.

8. Système selon la revendication 3, **caractérisé** en ce que les conducteurs La, Lc et Ld sont dirigés vers deux extrémités opposées de l'adaptateur (A) et le conducteur Lb est dirigé avec un conducteur, sous la forme du premier conducteur (1), menant à la deuxième extrémité de l'adaptateur (A).

9. Système selon la revendication 1, **caractérisé** en ce que le premier conducteur (1) est non isolé.

10. Système selon la revendication 1, **caractérisé** en ce que le premier conducteur (1) est entouré d'une isolation perforée.
